**Europäisches Patentamt**

(19) **European Patent Office**

**Office européen des brevets**

(11) Numéro de publication: **0 096 630**
**B1**

(12) **FASCICULE DE BREVET EUROPEEN**

(45) Date de publication du fascicule du brevet:
28.01.87

(21) Numéro de dépôt: 83401105.8

(22) Date de dépôt: 01.06.83

(51) Int. Cl.⁴: **B 23 K 26/10**, G 02 B 7/00

(54) Dispositif pour la transmission d'un faisceau énergétique.

(30) Priorité: **08.06.82 FR 8209973**

(43) Date de publication de la demande:
**21.12.83 Bulletin 83/51**

(45) Mention de la délivrance du brevet:
**28.01.87 Bulletin 87/5**

(84) Etats contractants désignés:
**BE CH DE GB IT LI SE**

(56) Documents cités:
**EP - A - 0 055 491**
**DE - A - 3 026 932**
**FR - A - 2 158 921**
**FR - A - 2 337 538**
**GB - A - 1 215 714**
**US - A - 3 528 424**

**JOURNAL OF SCIENTIFIC INSTRUMENTS (JOURNAL OF PHYSICS E), Series 2, vol. 2, no. 11, novembre 1969, pages 931-932, A. D. BEACH: "A laser manipulator for surgical use"**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Geffroy, Jean, 11 Bis, rue des Moines, F-78000 Versailles (FR)**
Inventeur: **Hofman, Michel, 7, Allée des Morelles, F-91360 Epinay sur Orge (FR)**
Inventeur: **Moulin, Maurice, 9, rue Théodore de Banville, F-91120 Palaiseau (FR)**
Inventeur: **Noel, Jean Paul, 22 Bis, rue des Grilions, F-92290 Chatenay Malabry (FR)**

(74) Mandataire: **Mongrédien, André et al, c/o BREVATOME 25, rue de Ponthieu, F-75008 Paris (FR)**

## Description

La présente invention a pour objet un dispositif pour la transmission d'un faisceau énergétique, et plus particulièrement d'un faisceau laser, qui permette d'amener celui-ci non seulement en tout point d'une pièce sur laquelle on travaille mais aussi dans tous les points d'une cellule à l'intérieur de laquelle est placé ce dispositif, et de lui donner, si on le désire, une inclinaison quelconque par rapport à la pièce à travailler.

De façon plus précise, l'invention permet d'amener un faisceau laser en tout point situé dans une zone sphérique de rayon égal à la longueur du dispositif.

Il existe à ce jour différents types d'appareils permettant de transmettre un faisceau laser en plusieurs points. Par exemple, certains dispositifs permettent d'amener et de focaliser un faisceau fixe sur une table animée de deux mouvements horizontaux dans des directions perpendiculaires, la table ou l'appareil permettant de focaliser le faisceau étant animé d'un mouvement vertical.

D'autres dispositifs combinent des mouvements de rotation, par exemple rotation d'un miroir réfléchissant le faisceau et rotation de la pièce sur laquelle on travaille: ce dernier dispositif s'applique surtout à la soudure de pièces circulaires.

D'autres systèmes utilisent des bras cylindriques creux réunis par des articulations comportant des miroirs pouvant dévier le faisceau. Un tel système est décrit dans le brevet britannique 1 215 714 qui a pour objet un dispositif permettant de dévier un faisceau laser grâce à un ou plusieurs miroirs et de le focaliser sur la pièce à travailler. L'une des variantes utilise une articulation permettant le raccordement de deux tubes dans lesquels se propage le faisceau. L'extrémité de chacun des tubes est courbée à angle droit et comporte un miroir incliné à 45° par rapport à l'axe optique du faisceau. A la jonction des deux tubes se trouve un système de roulements à billes permettant à l'un de ceux-ci d'effectuer un mouvement de rotation par rapport à l'autre, l'axe de rotation étant confondu avec l'axe optique de la partie du faisceau laser se trouvant entre les deux miroirs.

Le brevet américain n° 3 528 424 décrit un dispositif utilisable en chirurgie et comportant plusieurs bras articulés les uns par rapport aux autres le long desquels passe un faisceau laser utilisé pour cautériser les plaies.

Si tous ces systèmes permettent de dévier un faisceau laser, ils présentent néanmoins certains inconvénients. Tout d'abord, dans le cas du brevet britannique n° 1 215 714, les possibilités de mouvements sont limitées et ils ne permettent pas d'atteindre tous les points du volume contenu dans une sphère à l'intérieur de laquelle est placé le dispositif. De plus, dans l'exemple du brevet britannique n° 1 215 714, la disposition de l'articulation entre les deux tubes risque d'entraîner un porte-à-faux qui pourrait provoquer des déformations de l'un des tubes et l'axe optique du faisceau laser ne sera plus confondu avec l'axe géométrique du tube. Ce défaut apparaît également avec le système décrit dans le brevet américain n° 3 528 424 et ne permet pas une robotisation du dispositif.

Le document DE-A 3 026 932 décrit un dispositif se composant d'un premier bras formé d'un tube creux, d'un deuxième bras formé de deux demi-bras dont l'un au moins est creux et d'un troisième bras formé d'un tube creux. Le faisceau circule le long des tubes ou éléments creux et les bras sont réunis les uns aux autres par des articulations. Cependant, chaque bras est en porte-à-faux par rapport au précédent, ce qui entraîne des risques de déformation et de désalignement du faisceau.

La présente invention a justement pour but d'éliminer ces inconvénients en proposant un dispositif qui permette, à partir d'un faisceau laser fixe, de dévier celui-ci en ayant la possibilité d'atteindre tous les points du volume contenu dans une sphère à l'intérieur de laquelle est placé le dispositif et en évitant d'éventuels porte-à-faux aux articulations.

Ce dispositif ayant par lui-même cinq à six degrés de liberté, la pièce de travail peut être de toute géométrie, plane, cylindrique, rectangulaire ou sphérique et rester fixe dans la cellule; il est inutile de prévoir un mouvement de cette pièce selon un ou deux degrés de liberté.

Le dispositif objet de l'invention comporte, de manière connue:

– un premier bras formé d'un tube creux mobile en rotation autour de son axe longitudinal, l'axe du faisceau d'entrée coïncidant avec cet axe longitudinal, le tube creux contenant un miroir faisant un angle de 45° avec l'axe du faisceau,

– un deuxième bras formé de deux demi-bras dont l'un au moins est creux et véhicule le faisceau, ce demi-bras étant articulié sur le tube creux grâce à une pièce intermédiaire, celle-ci étant creuse et contenant un miroir faisant un angle de 45° avec l'axe du faisceau, le deuxième bras étant mobile en rotation par rapport au premier autour d'un axe perpendiculaire à l'axe longitudinal du tube creux, et

– un troisième bras formé d'un tube articulé sur le demi-bras creux par une pièce intermédiaire, celle-ci étant creuse et contenant un miroir faisant un angle de 45° avec l'axe du faisceau.

Selon l'invention, les demi-bras ont le même poids et sont symétriques l'un de l'autre par rapport à un plan contenant l'axe longitudinal du premier bras, le deuxième demi-bras étant lui aussi articulé sur le premier bras. De plus, le troisième bras est articulé sur le deuxième demi-bras par une pièce intermédiaire; il est placé entre les deux demi-bras et a son axe longitudinal dans le plan de symétrie du deuxième bras. Enfin, le troisième bras est mobile en rotation par rapport au deuxième autour d'un axe perpendiculaire à son axe longitudinal et perpendiculaire audit plan de symétrie.

Cet agencement du dispositif est particulièrement bien adapté à son utilisation pour l'usinage par faisceau laser en enceinte active. En effet, lorsqu'il est déployé selon sa plus grande longueur, par exemple sous l'action de la pesanteur, il prend une position d'équilibre bien déterminée correspondant à un encombrement latéral réduit; lorsque son extrémité est amenée en un point de l'espace, les angles formés entre les différents bras successifs sont bien déterminés; ces particularités de comportement, liées à la rigidité consécutive à l'existence d'un dédoublement mécanique du deuxième bras, sont utiles lorsque l'on désire introduire le dispositif de transmission du faisceau laser à travers une ouverture, circulaire ou tubulaire, ménagée dans une enceinte active et sont indispensables lorsqu'on envisage une robotisation du dispositif.

Selon une autre caractéristique du dispositif, l'un au moins des bras autres que le premier peut être muni d'un contrepoids d'équilibrage. On peut aussi prévoir des moteurs de déplacement sur certaines articulations, les moteurs pouvant eux-mêmes faire office de contrepoids.

Suivant un mode de réalisation préféré, ladite articulation comprend:

– une pièce intermédiaire creuse liée à un tube appartenant à l'un des bras et contenant un premier miroir plan faisant un angle de 45° avec la direction du faisceau se propageant dans le tube,
– une pièce de liaison mobile en rotation par rapport à ladite pièce intermédiaire autour d'un axe confondu avec l'axe optique du faisceau réfléchi par le premier miroir, et
– un deuxième miroir plan monté à l'intérieur de la pièce de liaison et faisant un angle de 45° avec le faisceau réfléchi par le premier miroir.

Selon une autre caractéristique du dispositif, celui-ci comprend un quatrième bras de faible longueur relié au troisième par une articulation comprenant une pièce intermédiaire, cette articulation comprenant au moins un miroir faisant un angle de 45° avec le faisceau.

L'expression «faible longueur» signifie que la longueur du quatrième bras est suffisamment faible pour que sa masse soit faible par rapport à celle de l'ensemble du dispositif afin que l'équilibre de l'ensemble soit très peu modifié par l'adjonction de ce quatrième bras.

Suivant une autre caractéristique du dispositif objet de l'invention, celui-ci peut comporter en outre:
– un quatrième bras formé de deux demi-bras et relié au troisième par une articulation, et
– un cinquième bras formé d'une seule pièce et relié au quatrième par une articulation.

Enfin, on peut prévoir une lentille ou un dispositif de focalisation placé à l'entrée du dispositif (ce qui permet de diminuer la longueur des bras) ainsi qu'un système de refroidissement des miroirs.

L'invention apparaîtra mieux à la lecture de la description qui va suivre, donnée à titre d'exemple purement illustratif et nullement limitatif, en référence aux dessins annexés dans lesquels:

– la figure 1 est une vue schématique en perspective de l'ensemble du dispositif objet de l'invention,
– la figure 2 est une vue de dessus du dispositif de la figure 1, illustrant l'ensemble des mouvements permis par la configuration de celui-ci, et
– la figure 3 est une vue schématique en coupe, montrant plus en détail l'une des articulations de ce dispositif.

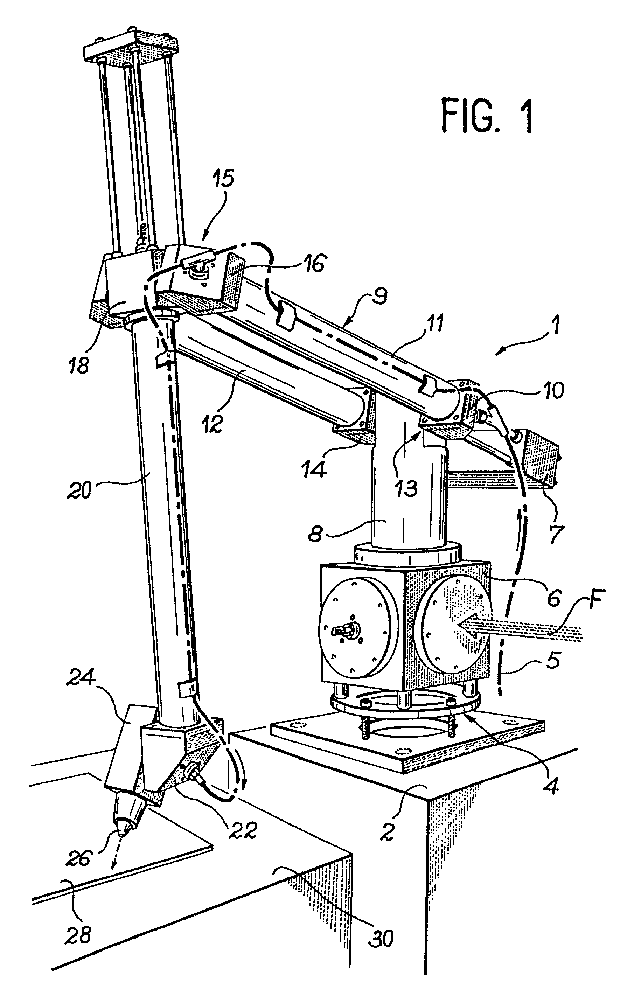

Sur la figure 1, on voit l'ensemble du dispositif, portant la référence générale 1, qui est posé sur un support 2 par l'intermédiaire d'une plaque 4. La plaque 4 est munie de réglages suivant les axes x, y, z. A la base du dispositif se trouve une chambre 6, de forme sensiblement cubique et où arrive le faisceau laser à transmettre. Ce dernier a son axe optique horizontal et rencontre un miroir plan en cuivre, situé à l'intérieur de la chambre 6 et incliné à 45° par rapport à la direction du faisceau de manière à renvoyer celui-ci verticalement. La position du miroir est telle que l'axe optique du faisceau réfléchi soit confondu avec l'axe d'un tube cylindrique vertical 8 qui surmonte la chambre 6 et tourne sur l'axe mécanique de cette chambre. Cependant, on ne sortirait pas du cadre de l'invention avec une configuration dans laquelle le faisceau F pénètrerait dans le dispositif suivant une direction confondue avec l'axe du tube 8.

A la partie supérieure de ce dernier, qui constitue le premier bras du dispositif, un autre miroir plan en cuivre, toujours incliné à 45° par rapport au faisceau, renvoie celui-ci horizontalement dans une pièce intermédiaire 10 qui relie le tube 8 à un deuxième tube 11 faisant partie du deuxième bras du dispositif, ce deuxième bras portant la référence générale 9. La pièce intermédiaire contient un troisième miroir plan qui renvoie le faisceau laser le long du tube 11 et suivant l'axe de celui-ci.

Le bras 9 se compose de deux tubes cylindriques parallèles ou demi-bras 11 et 12 disposés symétriquement par rapport au premier tube 8. L'agencement de l'articulation 13 entre le tube 8 et le bras 9 est telle que ce dernier peut effectuer deux mouvements de rotation: tout d'abord, le tube 8 est mobile autour de son axe et l'ensemble constitué par le tube 8 et le bras 9 est mobile en rotation autour de cet axe. D'autre part, les tubes 11 et 12 ainsi que les pièces intermédiaires 10 et 14 qui les relient au tube 8 peuvent pivoter autour d'un axe horizontal qui rencontre l'axe vertical du tube 8. Le fait d'utiliser, pour le bras 9, deux tubes parallèles et placés symétriquement par rapport au tube 8 permet d'éviter les porte-à-faux qui se produiraient dans le cas où il n'y aurait que le seul tube 11, par exemple: ceci permet, bien que l'axe optique soit décalé par rapport à l'axe mécanique du dispositif, d'obtenir que le point de travail soit constamment dans un plan passant par l'axe du faisceau laser d'entrée confondu avec l'axe du tube 8. La présence des deux tubes 11 et 12 permet de compenser cette tendance et de maintenir le bras 9 constamment en position correcte par rapport au tube 8. Bien entendu, dans cette configuration, on n'utilise qu'un seul des deux tubes pour la transmission du faisceau, l'autre étant utilisé pour le passage de câbles par exemple, ou pour véhiculer un fluide de refroidissement des miroirs ou les gaz nécessaires à l'usinage. L'équilibrage du bras 9 est obtenu par un contrepoids tel que 7, ce dernier pouvant éventuellement être remplacé par un moteur jouant le rôle d'un contrepoids: cette disposition a l'avantage de demander moins d'efforts aux moteurs de commande. A l'autre extrémité de chacun des tubes 11 et 12 se trouve une autre articulation 15 permettant de relier le bras 9 à un tube cylindrique 20 qui constitue le troisième bras du dispositif.

L'articulation 15 comporte tout d'abord une pièce intermédiaire 16 montée sur le tube 11 et contenant un miroir plan incliné à 45° par rapport à l'axe du faisceau, ce qui permet de dévier celui-ci sur un deuxième miroir également plan et incliné à 45° par rapport à l'axe du faisceau réfléchi par le premier miroir. Ce deuxième miroir est placé à l'intérieur d'une pièce de liaison 18 et le tube 20 est relié à cette dernière de sorte qu'il puisse tourner autour de son axe. De plus, l'ensemble constitué par le tube 20 et la pièce 18 est mobile autour d'un axe horizontal qui reste perpendiculaire à l'axe des tubes 11 et 12 quelle que soit la position de ces derniers. Enfin, à l'extrémité inférieure du tube 20 se trouve une pièce intermédiaire 22, identique à la pièce intermédiaire 16, qui permet de renvoyer le faisceau sur un dernier miroir se trouvant dans un boîtier 24. Ce dernier est mobile en rotation autour d'un axe confondu avec l'axe optique du faisceau réfléchi par le miroir se trouvant dans la pièce intermédiaire 22. Le faisceau sort par une buse 26 montée sur le boîtier 24, ce qui permet d'effectuer des travaux d'usinage ou de soudage sur une pièce, par exemple une plaque métallique 28 posée sur une table 30. Le boîtier 24 et la buse 26 sont en porte-à-faux mais ce défaut est tolérable sur ces pièces de masse réduite.

Une variante utilise à l'extrémité du tube 20 une combinaison mécanique identique à la configuration des pièces 8, 11 et 12, de telle façon que le boîtier 24 soit dans l'axe du dispositif.

Le boîtier 24 contient le système de focalisation ici représenté par un miroir, qui peut être sphérique, parabolique, cylindrique ou autre. Il peut utiliser une ou plusieurs lentilles de focalisation.

On peut cependant placer la lentille de focalisation à un autre endroit: si cette lentille est placée à l'entrée du dispositif, dans la chambre 6 par exemple, sa distance focale doit être égale au trajet parcouru par le faisceau le long des différents bras de l'appareil pour que le point focal se trouve sur la pièce à usiner 26. Cette disposition diminue le poids des organes situés à l'extrémité du bras, elle permet de plus de diminuer le diamètre des bras de la chambre 6 à la buse 26 et donc encore le poids des organes à mesure que l'on va vers l'extrémité du bras. Enfin, une conduite de gaz 5, représentée schématiquement en traits mixtes sur la figure 1, permet d'amener le gaz nécessaire pour refroidir les miroirs et plus particulièrement les miroirs se trouvant dans les pièces intermédiaires 10, 16 et 22.

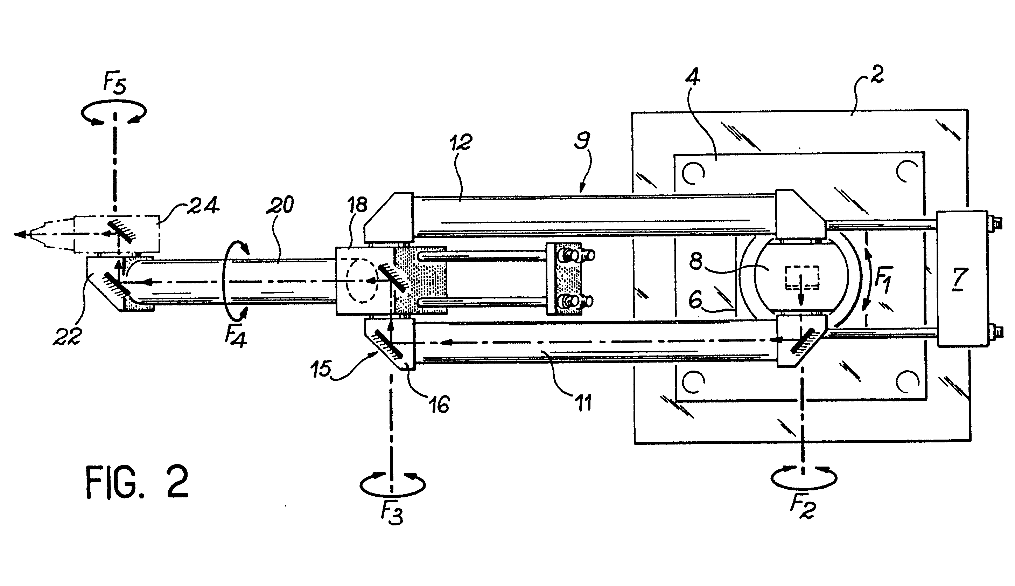

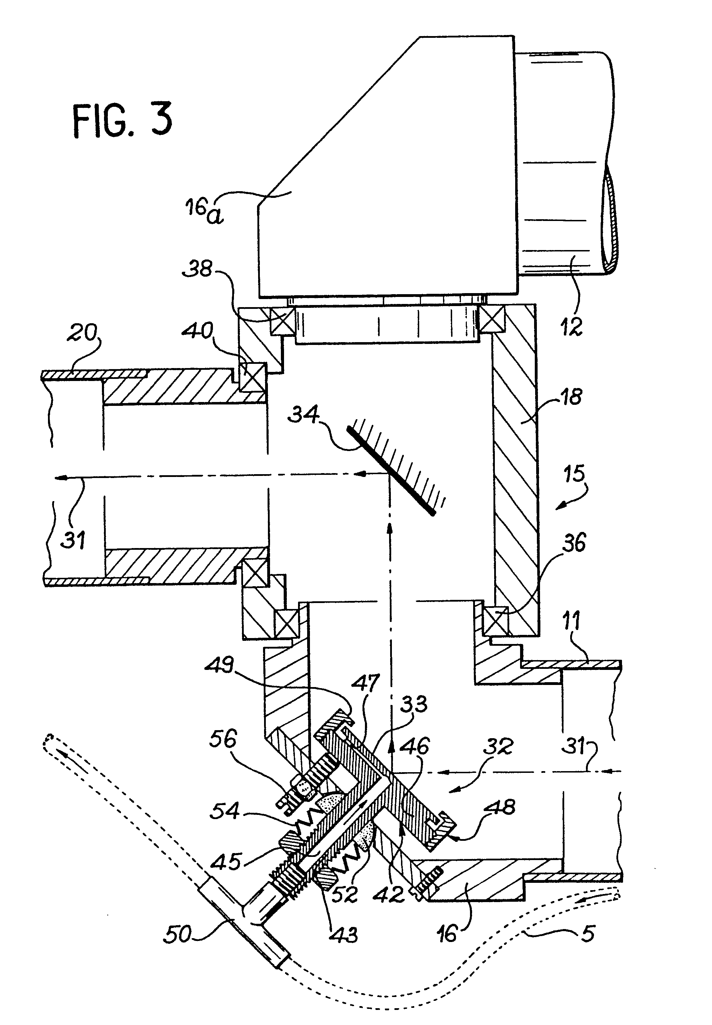

La vue de dessus de la figure 2 montre les différents mouvements de rotation permis par le dispositif. On voit tout d'abord le premier tube 8, l'ensemble constitué par ce tube et le bras 9 étant mobile autour de l'axe vertical du tube 8 (flèche F1). D'autre part, le bras 9 peut tourner autour d'un axe horizontal rencontrant l'axe vertical du tube 8 (flèche F2). L'articulation 15 entre le bras 9 et le tube 20 permet encore deux mouvements de rotation: la pièce intermédiaire 16 est fixe par rapport au tube 11 mais l'ensemble constitué par le tube 20 et la pièce de liaison 18 est mobile autour d'un axe confondu avec l'axe optique du faisceau réfléchi par le miroir contenu dans la pièce intermédiaire 16 (flèche F3). Enfin, le tube 20 est mobile en rotation autour de son axe (flèche F4), celui-ci étant confondu avec l'axe optique du faisceau réfléchi par le miroir contenu dans la pièce intermédiaire 18. Enfin la pièce intermédiaire 22, située à l'extrémité opposée du tube 20 par rapport à la pièce de liaison 18, est fixe par rapport à ce tube mais le boîtier 24 est mobile en rotation autour d'un axe confondu avec l'axe du faisceau réfléchi par le miroir placé à l'intérieur de la pièce 22 (flèche F5). La pièce de liaison 18 est reliée aux pièces intermédiaires 16, 16a par des roulements 36, 38 comme montré en figure 3 ou, dans une variante motorisée, par un système d'engrenages occupant la même position. Ainsi le dispositif selon l'invention présente 5 degrés de liberté et, en combinant tous ces mouvements de rotation, on peut atteindre n'importe quel point d'une enceinte à l'intérieur de laquelle ce dispositif serait placé, si naturellement la longueur cumulée des bras est égale aux dimensions de l'enceinte.

La figure 3 montre plus en détail la configuration de l'articulation 15. Cette figure est une vue de dessus en coupe correspondant au cas où les tubes 11 et 12 d'une part, le tube 20, d'autre part, ont leurs axes situés dans un même plan. Sur la figure, on voit le tube 11 dans lequel se propage le faisceau laser indiqué en 31 et la pièce intermédiaire 16 qui est fixée au tube 11. A l'intérieur de la pièce 16, se trouve un miroir 32 en cuivre présentant une face plane 33 inclinée à 45° par rapport à l'axe du faisceau 31 de manière à renvoyer celui-ci sur un deuxième miroir 34 placé à l'intérieur de la pièce de liaison 18. Ce dernier est encore placé à 45° par rapport à l'axe du faisceau réfléchi par le premier miroir 32 et renvoie le faisceau à angle droit à l'intérieur du tube 20. On voit encore sur la figure 3 le deuxième tube 12 du bras 9 relié à la pièce de liaison 18 par une pièce intermédiaire 16a identique à la pièce 16. La pièce de liaison 18 est reliée aux pièces intermédiaires 16 et 16a par des roulements 36 et 38 respectivement, ce qui permet à l'ensemble constitué par la pièce de liaison 18 et le tube 20 de pivoter autour d'un axe de rotation confondu avec l'axe de la partie du faisceau 31 situé entre les deux miroirs 32 et 34. D'autre part, le tube 20 est relié à la pièce de liaison 18 par un autre roulement 40, ce qui permet au tube 20 de tourner autour de son axe, qui est confondu avec l'axe optique du faisceau réfléchi par le miroir 34. Ainsi, la buse 26 peut être amenée en tout point de l'espace contenu à l'intérieur d'une sphère dont le rayon est la somme des longueurs des bras 9 et 20 et centré sur l'articulation 13, de plus, on peut donner à la buse 26 toute orientation désirée dans l'espace.

La figure 3 montre encore comment est constitué le miroir 32 équipant la pièce intermédiaire 16. Ce miroir comprend d'abord une première pièce 42 dont une première partie 43 a la forme d'un cylindre percé axialement d'un conduit 45 et une deuxième partie 46 a la forme d'un disque présentant une surface plane circulaire 33, le plan de cette surface étant perpendiculaire à l'axe de la partie cylindrique 43. Le conduit 45 est prolongé, à l'intérieur du disque 46, par plusieurs conduits 47 qui lui sont perpendiculaires et débouchent sur la surface latérale du disque 46. Un déflecteur 48 est vissé sur le disque 46 et il présente un bord rabattu 49 permettant de rabattre le gaz sortant du conduit 47 sur la surface plane 33 du disque 46. Le gaz de refroidissement circulant dans le tuyau 5 est introduit dans le conduit 45 grâce au raccord 50 en forme de T. Le rôle du déflecteur 48 est de rabattre le courant gazeux arrivant par les conduits 45 et 47 sur la surface du disque 46, non seulement pour refroidir celui-ci, mais pour en éliminer toutes les poussières qui pourraient s'y déposer. On voit sur la figure que la partie cylindrique 43 du miroir 32 débouche à l'extérieur de la pièce intermédiaire 16, l'arrivée de gaz 5 étant située à l'extérieur des différentes pièces du dispositif. Le miroir 32 est maintenu en position grâce à une rotule 52 maintenue par un empilement de pièces élastiques 54. La position du miroir 32 est réglable par des vis telles que 56 débouchant également à l'extérieur de la pièce intermédiaire 16. Il y a pour tous les miroirs tels que 32 ou 34 trois vis 56, ce qui permet de régler la position de chaque miroir depuis l'extérieur de l'appareil.

Dans le cas du miroir 34 on utilise un dispositif de maintien et de refroidissement analogue à celui du miroir 32 mais adapté pour être fixé à la pièce de liaison 18.

Dans une variante, le circuit de refroidissement du miroir 34 emprunte le tube 12 non utilisé pour la propagation du faisceau laser.

Le dispositif selon l'invention présente de nombreux avantages dont le principal est de pouvoir, à partir d'un faisceau laser fixe, amener l'extrémité de celui-ci dans tous les points d'un volume donné grâce aux nombreuses rotations permises par les articulations reliant les bras de l'appareil. De plus, le fait d'avoir pour le deuxième bras 9 une structure présentant deux tubes parallèles 11 et 12, disposés symétriquement par rapport au tube vertical 8, évite les porte-à-faux et contribue à maintenir l'axe optique du faisceau laser confondu avec l'axe géométrique des tubes ou avec les axes de rotation de diverses articulations.

L'équilibre des différents bras peut être assuré par des contre-poids comme le contre-poids 7, visible à la figure 1; dans un mode de réalisation motorisé où les rotations relatives de chacun des bras sont obtenues à l'aide de moteurs, on peut prévoir de placer des moteurs de commande à la place de ces contre-poids.

Quant aux applications, elles couvrent tous les domaines où l'on a besoin de déplacer un faisceau énergétique en différents points d'un volume donné et, notamment le soudage et l'usinage par faisceau laser dans une cellule radio-active.

**Revendications**

1. Dispositif pour la transmission d'un faisceau énergétique comprenant:
   – un premier bras formé d'un tube creux (8) mobile en rotation autour de son axe longitudinal, l'axe du faisceau d'entrée coïncidant avec cet axe longitudinal, le tube creux (8) contenant un miroir faisant un angle de 45° avec l'axe du faisceau,
   – un deuxième bras (9) formé de deux demi-bras (11, 12) dont l'un au moins (11) est creux et véhicule le faisceau, ce demi-bras (11) étant articulé sur le tube creux (8) grâce à une pièce intermédiaire (10), celle-ci étant creuse et contenant un miroir faisant un angle de 45° avec l'axe du faisceau, le deuxième bras étant mobile en rotation par rapport au premier autour d'un axe perpendiculaire à l'axe longitudinal du tube creux (8), et
   – un troisième bras formé d'un tube creux (20) articulé sur le demi-bras creux (11) par une pièce intermédiaire (16), celle-ci étant creuse et contenant un miroir faisant un angle de 45° avec l'axe du faisceau,
   caractérisé en ce que les demi-bras (11, 12) ont le même poids et sont symétriques l'un de l'autre par rapport à un plan contenant l'axe longitudinal du premier bras (8), le deuxième demi-bras (12) étant lui aussi articulé sur le premier bras (8), et en ce que le troisième bras (20) est articulé sur le deuxième demi-bras (12) par une pièce intermédiaire (16a), le troisième bras étant placé entre les deux demi-bras (11, 12) et ayant son axe longitudinal dans le plan de symétrie du deuxième bras (9), le troisième bras étant mobile en rotation par rapport au deuxième autour d'un axe perpendiculaire à son axe longitudinal et perpendiculaire audit plan de symétrie.

2. Dispositif selon la revendication 1, caractérisé en ce que l'un au moins (9) des bras autres que le premier (8) est équipé d'un contrepoids d'équilibrage (7).

3. Dispositif selon la revendication 2, caractérisé en ce que l'une au moins des articulations (13) est équipée d'un moteur de déplacement.

4. Dispositif selon la revendication 3, caractérisé en ce que le moteur fait lui-même office de contrepoids.

5. Dispositif selon la revendication 1, caractérisé en ce que le tube (20) constituant le troisième bras du dispositif est mobile en rotation autour de son axe longitudinal.

6. Dispositif selon la revendication 1, caractérisé en ce qu'il comprend un quatrième bras (24) de faible longueur relié au troisième (20) par une articulation comprenant une pièce intermédiaire (22), cette articulation comprenant au moins un miroir faisant un angle de 45° avec le faisceau.

7. Dispositif selon la revendication 1, caractérisé en ce qu'il comprend en outre:
– un quatrième bras formé de deux demi-bras et relié au troisième (20) par une articulation, et
– un cinquième bras formé d'une seule pièce et relié au quatrième par une articulation.

8. Dispositif selon la revendication 1, caractérisé en ce qu'il comprend une lentille de focalisation du faisceau placée à l'entrée du dispositif.

9. Dispositif selon la revendication 1, caractérisé en ce que l'un au moins des miroirs (32) est équipé d'un système de refroidissement.

## Patentansprüche

1. Vorrichtung zur Übertragung eines energetischen Strahlungsbündels mit:
– einem ersten Arm, der von einem um seine Längsachse drehbaren, hohlen Rohr (8) gebildet ist, wobei die Achse des Eintrittsbündels mit dieser Längsachse zusammenfällt und das hohle Rohr (8) einen Spiegel enthält, der einen 45°-Winkel mit der Bündelachse bildet,
– einem zweiten Arm (9), der von zwei Teilarmen (11, 12) gebildet ist, von denen wenigstens einer (11) hohl ist und das Bündel transportiert, wobei dieser Teilarm (11) an dem hohlen Rohr (8) dank eines Zwischenteils (10) verschwenkbar ist, welches hohl ist und einen Spiegel enthält, der einen 45°-Winkel mit der Bündelachse bildet, und wobei der zweite Arm relativ zu dem ersten um eine zur Längsachse des hohlen Rohres (8) senkrechte Achse drehbar ist, und
– einem dritten Arm, welcher von einem hohlen Rohr (20) gebildet ist, das an dem hohlen Teilarm (11) mit einem Zwischenteil (16) angelenkt ist, welches hohl ist und einen Spiegel enthält, der einen 45°-Winkel mit der Bündelachse bildet, dadurch gekennzeichnet, dass die Teilarme (11, 12) das gleiche Gewicht aufweisen und in Bezug auf eine, die Längsachse des ersten Armes (8) enthaltende Ebene zueinander symmetrisch sind, dass der zweite Teilarm (12) ebenfalls an dem ersten Arm (8) angelenkt ist, und dass der dritte Arm (20) an dem zweiten Teilarm (12) mittels eines Zwischenteils (16a) angelenkt ist, dass der dritte Arm zwischen den zwei Teilarmen (11, 12) angeordnet ist und seine Längsachse in der Symmetrieebene des zweiten Armes (9) verläuft, und dass der dritte Arm in Bezug auf den zweiten um eine Achse drehbar ist, die senkrecht zu seiner Längsachse und senkrecht zu der genannten Symmetrieebene verläuft.

2. Vorrichtung nach Anspruch 1, dadurch gekennzeichnet, dass wenigstens einer (9) der Arme mit Ausnahme des ersten (8) mit einem Ausgleichsgewicht (7) ausgerüstet ist.

3. Vorrichtung nach Anspruch 2, dadurch gekennzeichnet, dass wenigstens eines der Gelenke (13) mit einem Motor zur Bewegung ausgerüstet ist.

4. Vorrichtung nach Anspruch 3, dadurch gekennzeichnet, dass der Motor selbst als Gegengewicht wirkt.

5. Vorrichtung nach Anspruch 1, dadurch gekennzeichnet, dass das den dritten Arm der Vorrichtung bildende Rohr (20) um seine Längsachse drehbar ist.

6. Vorrichtung nach Anspruch 1, dadurch gekennzeichnet, dass sie einen vierten Arm (24) geringer Länge aufweist, der mit dem dritten (20) über ein ein Zwischenteil (22) aufweisendes Gelenk verbunden ist, welches wenigstens einen Spiegel umfasst, der einen 45°-Winkel mit dem Bündel bildet.

7. Vorrichtung nach Anspruch 1, dadurch gekennzeichnet, dass sie ferner umfasst:
– einen vierten Arm, der von zwei Teilarmen gebildet und über ein Gelenk mit dem dritten (20) verbunden ist, und
– einen fünften Arm, der aus einem einzigen Teil besteht und über ein Gelenk mit dem vierten verbunden ist.

8. Vorrichtung nach Anspruch 1, dadurch gekennzeichnet, dass sie eine Fokussierungslinse für das Bündel umfasst, die am Eingang der Vorrichtung angeordnet ist.

9. Vorrichtung nach Anspruch 1, dadurch gekennzeichnet, dass wenigstens einer der Spiegel (32) mit einem Kühlsystem ausgerüstet ist.

## Claims

1. Apparatus for transmitting an energy beam comprising:
– a first arm consisting of a hollow tube (8) rotationally movable about its longitudinal axis, the axis of the inlet beam coinciding with said longitudinal axis and said hollow tube (8) containing a mirror forming an angle of 45° with the axis of the beam,
– a second arm (9) composed of two half-arms (11, 12), of which at least one (11) is hollow and carries the beam, said half-arm (11) being articulated on the hollow tube (8) with the aid of an intermediate member (10) which is hollow and contains a mirror forming an angle of 45° with the axis of the beam, the second arm being rotationally movable relative to the first about an axis perpendicular to the longitudinal axis of the hollow tube (8), and
– a third arm formed by a hollow tube (20) articulated on the hollow half-arm (11) by an intermediate member (16) which is hollow and contains a mirror forming an angle of 45° with the axis of the beam, characterized in that the half-arms (11, 12) have the same weight and are symmetrical to one another in relation to a plane containing the longitudinal axis of the first arm (8), the second half-arm (12) also being articulated on the first arm (8), and in that the third arm (20) is articulated on the second half-arm (12) by an intermediate member (16a), the third arm being placed between the two half-arms (11, 12) and having its longitudinal axis in the plane of symmetry of the second arm (9), and the third arm being rotationally movable in relation to the second about an axis perpendicular to its longitudinal axis and perpendicular to said plane of symmetry.

2. Apparatus according to Claim 1, characterized in that at least one (9) of the arms other than the first (8) is equipped with a balancing counterweight (7).

3. Apparatus according to Claim 2, characterized in that at least one of the articulations (13) is equipped with a displacement motor.

4. Apparatus according to Claim 3, characterized in that the motor itself serves as counterweight.

5. Apparatus according to Claim 1, characterized in that the tube (20) constituting the third arm of the apparatus is rotationally movable about its longitudinal axis.

6. Apparatus according to Claim 1, characterized in that it has a fourth arm (24) of slight length connected to the third ara (20) by an articulation comprising an intermediate member (22) and having at least one mirror forming an angle of 45° with the beam.

7. Apparatus according to Claim 1, characterized in that it comprises in addition:

– a fourth arm composed of two half-arms and connected to the third arm (20) by an articulation, and

– a fifth arm composed of a single piece and connected the fourth arm by an articulation.

8. Apparatus according to Claim 1, characterized in that it is provided with a beam focussing lens disposed at the inlet of the apparatus.

9. Apparatus according to Claim 1, characterized in that at least one of the mirrors (32) is equipped with a cooling system.

FIG. 1

FIG. 2

FIG. 3

0 096 630

13